# EUROPEAN PATENT SPECIFICATION

(11) **EP 1 925 093 B1**
(45) Date of publication and mention of the grant of the patent: **15.05.2013**
(21) Application number: 06798685.1
(22) Date of filing: 07.09.2006
(51) Int. Cl.: H04M 1/2745

(54) **METHOD AND APPARATUS FOR IMPROVED CALLING IN A MOBILE COMMUNICATION TERMINAL**
VERFAHREN UND VORRICHTUNG ZUM VERBESSERTEN ANRUFEN IN EINEM MOBILEN KOMMUNIKATIONSENDGERÄT
PROCEDE ET APPAREIL POUR AMELIORER LES APPELS DANS UN TERMINAL DE COMMUNICATIONS MOBILES

(30) Priority: 13.09.2005 KR 20050085020
(43) Date of publication of application: 28.05.2008
(73) Proprietor: Samsung Electronics Co., Ltd., Suwon-si, Gyeonggi-do, 443-742 (KR)
(72) Inventor: LEE, Sun-Gi, Seoul 134-870 (KR); LEE, Kang-Hoon, Gyeonggi-do 446-913 (KR); LEE, Cheong-Sun, Gyeonggi-do 443-736 (KR); SIM, Dae-Hyun, Seoul 137-071 (KR)
(74) Representative: Grünecker, Kinkeldey, Stockmair & Schwanhäusser
(86) International application number: PCT/KR2006/003548
(87) International publication number: WO 2007/032620

(56) References cited:
- EP-A2- 1 617 636
- WO-A1-99/46911
- KR-A- 20040 043 002
- US-A1- 2001 043 694
- US-A1- 2003 012 359
- US-A1- 2004 063 470
- US-A1- 2004 204 117

## Description

The present invention relates to a method and an apparatus for calling in a mobile communication terminal, and in particular to a method and an apparatus for adding an additional number or character during calling in a mobile communication terminal.
The additional number or character includes, but is not limited to, an area code, a zone service code, an international calling code, info-mobile service code, a roaming service code and a mobile coupon service code.

Mobile communication terminals are widely used due to their portability. Manufacturers are developing mobile communication terminals having special functions in an effort to secure more users.

For example, mobile communication terminals provide various additional functions such as a phone book, a short message, Internet access, e-mail, a morning or wake up call, an MP3 (MPEG Layer 3) player and a digital camera.

When using a phone book service, a user selects a telephone number in the phone book list. Here, even if the user would like to add a number, a character or a code (hereinafter, the term "code" also represents a number or character) for selecting a special service such as an international telephone call or an out-of state or out-of-area telephone call, it is difficult to add the code, such as a country code, or an area code prior to the telephone number.

In addition to the above additional functions, various additional services such as a caller identification service are becoming more common.

The caller identification service enables a receiver to identify a caller with caller information included in the mobile telecommunication terminal corresponding to an incoming call before taking the call. A return call by using the caller identification service associated with a telephone number list in the mobile communication terminal becomes possible. In this case, even if a user would like to add a code for selecting a special service such as an international telephone call or an out-of-state or out-of-area telephone call, it is difficult to add the code such as a country code or an area code prior to the telephone number.

Also, a combined mobile service (called info-mobile service) providing voice communication and data communication over a wire and wireless telephone line with one mobile telephone terminal in a specific location such as an office, a hotel or a company, is being widely used. In order to use the info-mobile service, a character key or a number key (e.g.: #9) for designating the info-mobile service is input prior to a telephone number. Also, even if a user would like to add a code for selecting the info-service, it is difficult to add the code prior to the telephone number.

It is also necessary to add a service code when using a zone rate service which is a kind of location based service.

Thus, it is necessary to provide a method and an apparatus for adding a code for designating an international telephone service, a distant area (out-of-state or out-of-area) telephone service, an info-mobile service or a zone rate service prior to a telephone number stored in a phone book or a return call telephone number using a caller identification service when making a call or a return call.

WO 99/46911 A1 refers to a system and method for use of feature codes in a wireless communication device. The system comprises a keypad input device to permit user entry of a destination telephone number. A memory contains a plurality of sets of additional digits to be added to the user-entered destination telephone number. The system further includes a user-controllable enable signal to selectively enable the addition of set of additional digits from the memory. A prefix storage area is used to store one or more feature codes that may be predefined by the telephone service provider or defined by the user. The user can select feature codes from the prefix storage area and add them to the partial destination telephone number to generate the complete destination telephone number. Once selected by the user, the feature codes may be automatically pre-pended to subsequent calls to the particular destination telephone number or pre-pended to all subsequently-entered destination telephone numbers. The user may enter the desired feature codes or additional prefixes, such as area codes, long distance codes and the like.

It is the object of the present invention to provide a method and apparatus for providing improved flexibility in initiating a call with modified calling numbers in a mobile communication terminal.

This object is solved by the subject matter of the independent claims.

Preferred embodiments are defined by the dependent claims.

FIG. 1 is a block diagram of a mobile communication terminal according to the present invention;

FIG. 2 is a flowchart illustrating a procedure for adding a code to a code list according the present invention;

FIG. 3 is a flowchart illustrating a procedure for adding a code prior to a calling number according to the present invention;

FIG. 4 is an illustration showing screens for a procedure for adding a code to a code list according the present invention;

FIG. 5 is an illustration including a screen for a reception call list according to the present invention;

FIG. 6 is an illustration showing screens for a procedure for adding a zone service code prior to a call number according to the present invention; and

FIG. 7 is a flowchart illustrating another procedure for adding a code prior to a calling number according to the present invention.

Preferred embodiments of the present invention will be described herein below with reference to the accompanying drawings. In the following description, well-known functions or constructions are not described in detail.

Hereinafter, the present invention will be described with reference to a technology for adding a code for a service prior to a calling number in a mobile communication terminal. The service may include, but is not limited to, an info-mobile service, an international telephone call service or a distant call service, such as an out-of-state or out-of-area call, a roaming service code and a mobile coupon service.

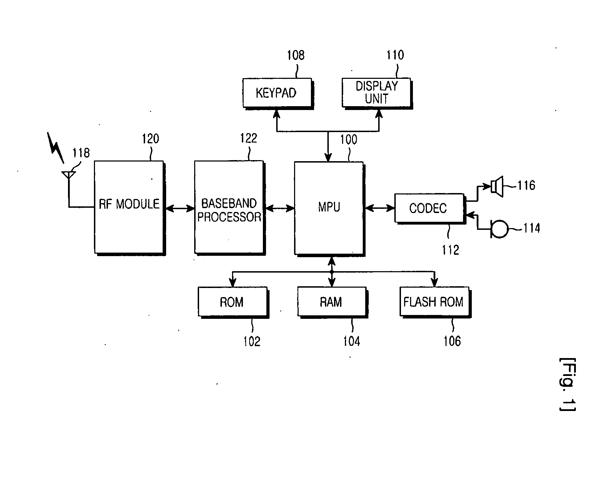

FIG. 1 is a block diagram of a mobile communication terminal according to the present invention. The mobile communication terminal includes, for example, a cellular phone, a Personal Communication System (PCS) terminal, a Personal Data Assistant (PDA) or IMT2000 (International Mobile Telecommunication-2000) terminal.

Referring to FIG. 1, a Micro-Processor Unit (MPU) 100 is a controller for controlling an overall operation of the portable terminal. For example, the MPU 100 is responsible for processing and controlling voice communication and data communication. In addition to the typical functions, the MPU 100 performs a function for adding a code for a specific service when performing a call or a return call. A detailed description of the general processing and controlling operation of the MPU 100 will not be described. The adding code includes, but is not limited to, an area code, a zone service code, an international calling code, info-mobile service code, a roaming service code and a mobile coupon service code. The code may be stored in the mobile communication terminal or may be manually input by a user. A calling number may be stored in a phonebook, a transmitting calling list or a receiving calling list in the mobile communication terminal, or may be manually input by the user.

Read Only Memory (ROM) 102 stores a microcode of software for processing and controlling the MPU 100 and all reference data. A Random Access Memory (RAM) 104, which is a working memory of the MPU, stores temporary data being generated while performing all programs. A Flash ROM 106 stores various updatable data to be kept, such as a phone book, an outgoing message and an incoming message. Further, the Flash ROM 106 stores a code list including at least one code for a service and a transmitting calling list including at least one telephone number and a receiving calling list including at least one reception call number. Read Only Memory (ROM) 102, Random Access Memory (RAM) 104 and Flash ROM 106 collectively can be referred as a memory.

An input means, such a as a key pad 108, includes a number of keys. The key input data corresponding to a key pressed by the user is transmitted to the MPU 100.

A touch pad or a touch screen (not shown) may be used as an input means. In this case touch elements in the touch pad or the touch screen correspond to the keys in the key pad.

The display unit 110 displays status information, a restricted number of characters, moving pictures and still pictures, and the like. The display unit 110 may be a color LCD (Liquid Crystal Display).

A Coder-Decoder (CODEC) 112 connected to the MPU 100, a microphone 114, and a speaker 116 connected to the CODEC 112 are audio input/output blocks for use in voice communication.

Radio Frequency (RF) module 120 drops a frequency of an RF signal received through an antenna 118 and provides the RF signal to a baseband processor 122. Also, the RF unit 120 increases a frequency of a baseband signal provided from the baseband processor 122, and transmits the baseband signals through the antenna 118. The baseband processor 122 processes the baseband signals which are transmitted/received between the RF unit 120 and the MPU 100.

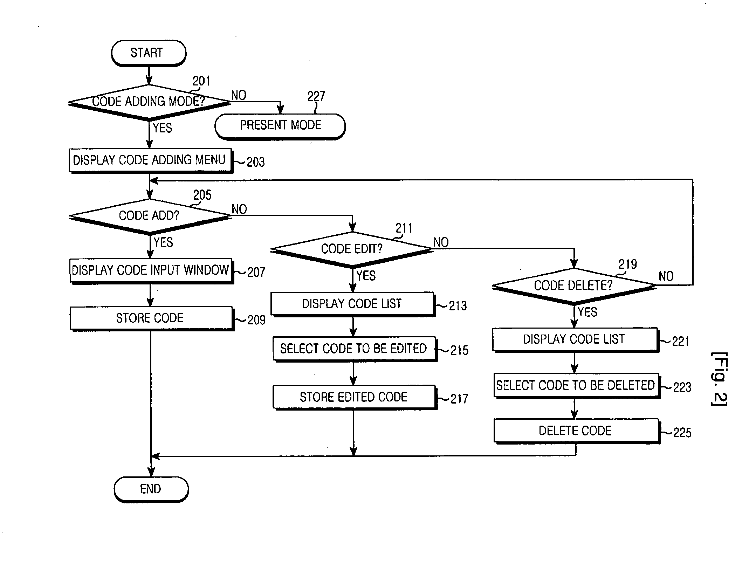

FIG. 2 is a flowchart illustrating a procedure for adding a code to a code list according the present invention.

As described above, the adding code includes, but is not limited to, an area code, a zone service code, an international calling code, info-mobile service code, a roaming service code and a mobile coupon service code. The code may be stored in the mobile communication terminal or may be input by the user.

Referring to FIG. 2, the MPU 100 checks whether a code adding mode is selected by user's key manipulation in step 201. If the code adding mode is not selected, the MPU 100 proceeds to step 227 to perform a present mode (e.g., a waiting mode).

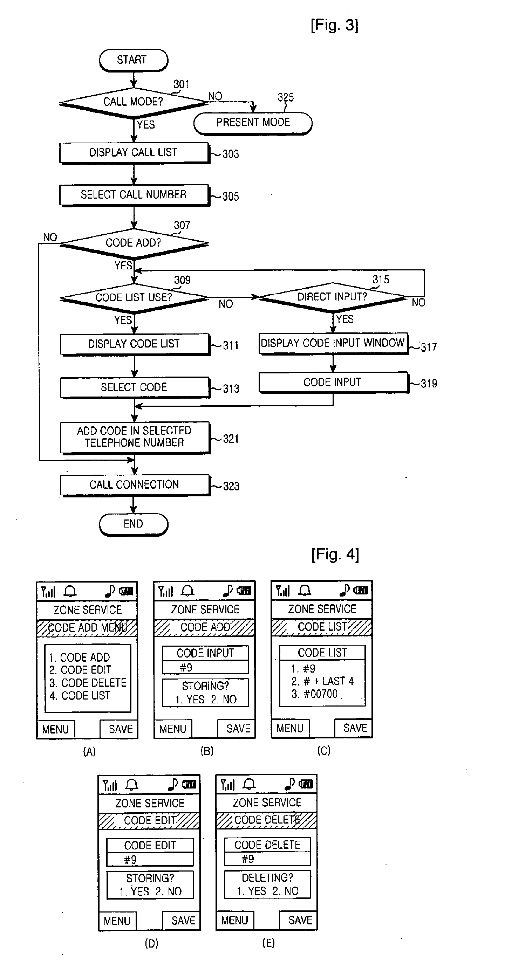

If the code adding mode is selected, the MPU 100 proceeds to step 203 to check whether a code adding menu (e.g., "1. Code Add", "2. Code Edit", "3. Code Delete", "4. Code List") is displayed on the display unit 110, as shown in FIG. 4A.

Next, the MPU 100 proceeds to step 205 to check whether a code adding menu is selected by a user's key manipulation. For example, the MPU 100 checks whether "1. Code Add" is selected in FIG. 4(A).

If the "1.Code Add" menu is selected, the MPU 100 proceeds to step 207 to display a code input window as shown in FIG. 4(B). If the code input window is displayed, the MPU 100 proceeds to step 209 to store a code input by a user's key manipulation in a memory. After this, the MPU 100 ends the process.

Meanwhile, if the code add menu is not selected at step 205, the MPU 100 proceeds to step 211 to check whether a code edit is selected menu by a user's key manipulation, for example, "2. Code Edit", as shown in FIG. 4(A).

If the code edit menu is selected, the MPU 100 proceeds to step 213 to display a code list as shown in FIG. 4(C). In step 215, the MPU 100 checks whether a code to be edited is selected from the code list. After this, the MPU 100 proceeds to step 217 to edit and store the selected code as shown in FIG. 4(D), and ends the process.

Meanwhile, if the code edit menu is not selected in step 211, the MPU 100 proceeds to step 219 to check whether a code delete menu is selected, for example, "3. Code Delete", as shown in FIG. 4(A). If the code delete menu is not selected in step 219, the MPU 100 returns step 205.

If the code delete menu is selected, the MPU 100 proceeds to step 221 to display a code list stored in the memory as shown in FIG. 4(C). After this, the MPU 100 proceeds to step 223 to check whether a code to be deleted is selected from the displayed code list by a user's key manipulation. After this, the MPU 100 proceeds to step 225 to delete the selected code and ends the process.

FIG. 3 is a flowchart illustrating a procedure for adding a code prior to a return call number according to the present invention.

Referring to FIG. 3, the MPU 100 checks whether a call mode is selected by a user's manipulation in step 301. If the call mode is not selected, the MPU 100 proceeds to step 325 to perform a present mode (e.g., a waiting mode).

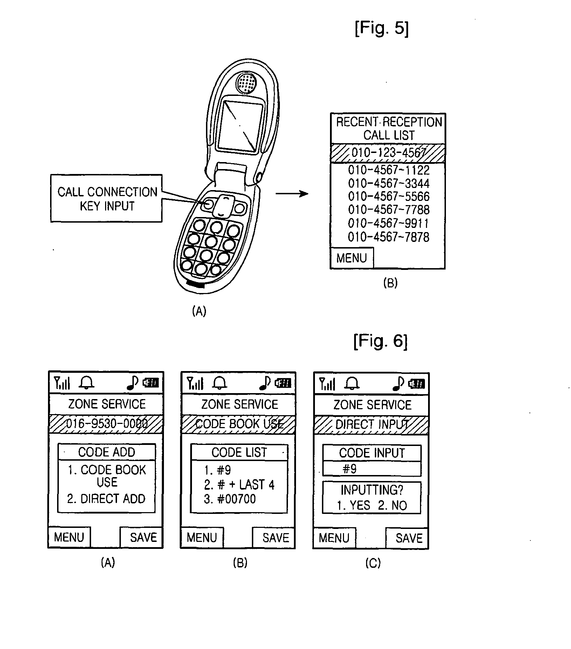

If the call mode is selected in step 301, the MPU 100 proceeds to step 303 to display a call list as shown in FIG. 5. For example, if a call connection key is pressed by a user's key manipulation, a recent call list is displayed as shown in FIG. 5(B). Alternatively, a phonebook storing at least one call number may be used. After this, the MPU 100 proceeds to step 305 to select a call number to connect by a user's key manipulation.

After selecting the call number, the MPU proceeds to step 307 to check whether a code add menu is selected by a user's key manipulation. If the code adding menu is not selected, the MPU 100 proceeds to step 323 to connect a call with the selected call number. After this, the MPU 100 ends the process.

If the code add menu is selected, the MPU 100 proceeds to step 309 to display the code add menu as shown in FIG. 6(A) and checks whether a code list use menu is selected.

If the code list use menu is selected, the code add menu is displayed as shown in FIG. 6(A), and the MPU 100 proceeds to step 311 to display the code list stored in the memory as shown in FIG. 6(B).

After this, if a code to be added is selected from the displayed code list in step 313, the MPU 100 proceeds to 321 to add the code selected in step 313 prior to the call number selected in step 305.

Meanwhile, the code list use menu is not selected in step 309, the MPU 100 proceeds to step 315 to check whether a direct input menu is selected. If the direct input menu is not selected, the MPU 100 returns to step 309.

If the direct input menu is selected, the MPU 100 proceeds to step 317 to display a code input window as shown in FIG. 6(C). After this, if a code is to be added is inputted by a user's key manipulation in step 319, the MPU 100 proceeds to step 321 to add the input code to the call number selected in step 305. After this, the MPU 100 proceeds to step 323 to connect a call with the code added call number, and ends the process.

That is, when performing a return call in the mobile communication terminal, the selected or code input by the user is added prior to the return call number. It is also possible to add a code for a service prior to a calling number from the calling list in the mobile communication terminal.

FIG. 4 is an illustration of screens for a procedure for adding a code to a code list according the present invention. Figs. 4(A), (B), (C), (D) and (E) are described above in connection with Fig. 2.

FIG. 5 is an illustration including a screen for a reception call list according to the present invention. The call list is displayed on the display unit. Figs. 5(A) and (B) are described above in connection with Fig. 3.

FIG. 6 is an illustration of screens for a procedure for adding a zone service code prior to a call number according to the present invention. Figs. 6(A), (B) and (C) are described above in connection with Fig. 3.

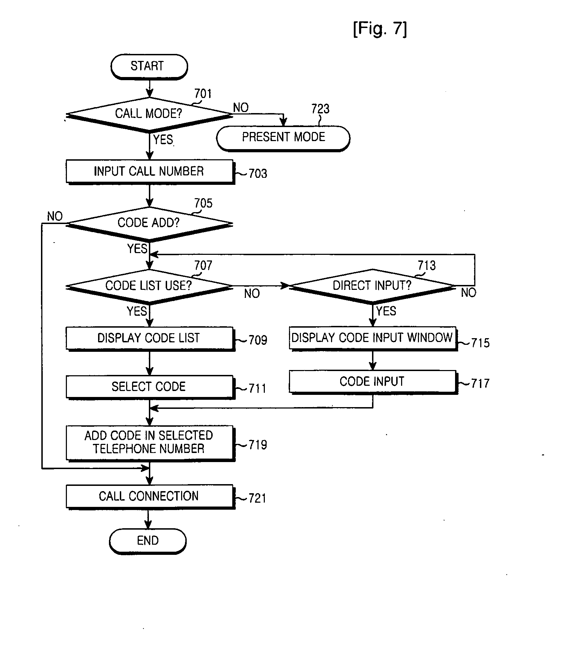

FIG. 7 is a flowchart illustrating another procedure for adding a code prior to a calling number according to the present invention.

Referring to FIG. 7, the MPU 100 checks whether a call mode is selected by a user's manipulation in step 701. If the call mode is not selected, the MPU 100 proceeds to step 723 to perform a present mode (e.g., a waiting mode).

If the call mode is selected in step 701, the MPU 100 proceeds to step 703 to check a call number input by a user's key manipulation.

If the call number is input, the MPU 100 proceeds to step 705 to check whether a code add menu is selected by a user's key manipulation. If the code adding menu is not selected, the MPU 100 proceeds to step 721 to connect a call with the selected call number. After this, the MPU 100 ends the process.

If the code add menu is selected, the MPU 100 proceeds to step 707 to display the code add menu as shown in FIG. 6(A) and checks whether a code list use menu is selected.

If the code list use menu is selected, the MPU 100 proceeds to step 709 to display the code list stored in the memory as shown in FIG. 6(B).

After this, if a code to be added is selected from the displayed code list in step 711, the MPU 100 proceeds to 719 to add the selected code prior to the call number input in step 703.

Meanwhile, if the code list use menu is not selected in step 707, the MPU 100 proceeds to step 713 to check whether a direct input menu is selected. If the direct input menu is not selected, the MPU 100 returns to step 707.

If the direct input menu is selected, the MPU 100 proceeds to step 715 to display a code input window as shown in FIG. 6(C). After this, if a code is to be added is input by a user's key manipulation in step 717, the MPU 100 proceeds to step 719 to add the input code to the call number input in step 703. After this, the MPU 100 proceeds to step 721 to connect a call with the code added call number, and ends the process.

That is, when performing a return call in the mobile communication terminal, the selected or code input by the user is added prior to the return call number. It is also possible to add a code for a service prior to a calling number from the calling list in the mobile communication terminal.

Alternate embodiments of the present invention can also comprise computer readable codes on a computer readable medium. The computer readable medium includes any data storage device that can store data that can be read by a computer system. Examples of a computer readable medium include magnetic storage media (such as ROM, floppy disks, and hard disks, among others), optical recording media (such as CD-ROMs or DVDs), and storage mechanisms such as carrier waves (such as transmission through the Internet). The computer readable medium can also be distributed over network coupled computer systems so that the computer readable code is stored and executed in a distributed fashion. Also, functional programs, codes, and code segments for accomplishing the present invention can be construed by programmers of ordinary skill in the art to which the present invention pertains.

While the present invention has been shown and described with reference to certain preferred embodiments thereof, it will be understood by those skilled in the art that various changes in form and details may be made therein without departing from the scope of the present invention as defined by the appended claims.

## Claims

1. A method for adding a code prior to a calling telephone number for a mobile communication terminal, comprising the steps of:
inputting (319, 717) a code to be added prior to a displayed calling telephone number:
adding (321, 719) the input code prior to the displayed calling telephone number; and
making (323, 721) a call with the code-added calling telephone number,
wherein the added code can be deleted after the step of adding the code, and the displayed calling telephone number is selected from a receiving calling list.

2. The method of claim 1, further comprising, before the step of inputting (319, 717) a code, selecting (307, 707) a code adding mode when a stored calling telephone number is selected.

3. The method of claim 1, wherein the code represents one of a service code for an info-mobile service, a country code for an international telephone service, an area code for a distant telephone service, a roaming service code and a mobile coupon code.

4. A mobile communication terminal comprising:
a memory (106) for storing a phonebook, a transmitting calling list or a receiving calling list including at least one calling telephone number; and
a controller (100) for displaying a calling telephone number stored in the memory and adding a input code prior to the displayed calling telephone number according to a user input, and making a call with the code-added calling telephone number,
wherein the controller (100) is adapted to delete the added code after being added to the calling telephone number, and
the displayed calling telephone number is selected from a receiving calling list in the memory.

5. The mobile communication terminal of claim 4, wherein the code represents one of a service code for an info-mobile service, a country code for an international telephone service, an area code for a distant telephone service, a roaming service code and a mobile coupon code.

6. A computer-readable recording medium having recorded thereon a program for adding a code prior to a calling number in a mobile communication terminal according to the method of one of claims 1 to 3.

## Patentansprüche

1. Verfahren zum Hinzufügen eines Codes vor einer Anruf-Telefonnummer für ein mobiles Kommunikationsendgerät, umfassend folgende Schritte:
Eingeben (319, 717) eines Codes, der vor einer angezeigten Anruf-Telefonnummer hinzuzufügen ist;
Hinzufügen (321, 719) des eingegebenen Codes vor der angezeigten Anruf-Telefonnummer; und
Tätigen (323, 721) eines Anrufes mit der mit dem Code versehenen Anruf-Telefonnummer,
wobei der hinzugefügte Code nach dem Schritt des Hinzufügens des Codes gelöscht werden kann, und
die angezeigte Anruf-Telefonnummer aus einer Empfangs-Anrufsliste gewählt wird.

2. Verfahren nach Anspruch 1, weiterhin umfassend, vor dem Schritt des Eingebens (319, 717) eines Codes, Auswählen (307, 707) eines Code-Hinzufügemodus', wenn eine gespeicherte Anruf-Telefonnummer gewählt wird.

3. Verfahren nach Anspruch 1, bei der der Code einen Dienstcode für einen mobilen Informationsdienst oder einen Ländercode für einen internationalen Telefondienst oder einen Bereichscode für einen entfernten Telefondienst oder einen Roaming-Dienstcode oder einen Mobil-Coupon-Code repräsentiert.

4. Mobiles Kommunikationsendgerät, umfassend:
einen Speicher (106) zum Speichern eines Telefonbuches, einer Sende-Anrufliste oder einer Empfangs-Anrufliste, die wenigstens eine Anruf-Telefonnummer umfassen; und
eine Steuereinheit (100) zum Anzeigen einer Anruf-Telefonnummer, die in dem Speicher gespeichert ist, und Hinzufügen eines Eingabecodes vor der angezeigten Anruf-Telefonnummer gemäß einer Benutzereingabe und Tätigen eines Anrufes mit der mit dem Code versehenen Anruf-Telefonnummer,
wobei die Steuereinheit (100) dazu eingerichtet ist, den hinzugefügten Code zu Löschen, nachdem dieser zu der Anruf-Telefonnummer hinzugefügt wurde, und
die angezeigte Anruf-Telefonnummer aus einer Empfangs-Anrufliste in dem Speicher gewählt wird.

5. Mobiles Kommunikationsgerät nach Anspruch 4, bei dem der Code einen Dienstcode für einen mobilen Informationsdienst oder einen Ländercode für einen internationalen Telefondienst oder einen Bereichscode für einen entfernten Telefondienst oder einen Roaming-Dienstcode oder einen Mobil-Coupon-Code repräsentiert.

6. Computerlesbares Medium, auf dem ein Programm zum Hinzufügen eines Codes vor einer Anruf-Telefonnummer in einem mobilen Kommunikationsendgerät gemäß dem Verfahren nach einem der Ansprüche 1 bis 3 gespeichert ist.

## Revendications

1. Procédé pour ajouter un code avant un numéro de téléphone d'appel pour un terminal de communication mobile, comprenant les étapes consistant à :
- entrer (319, 717) un code à ajouter avant un numéro de téléphone d'appel affiché ;
- ajouter (321, 719) le code entré avant le numéro de téléphone d'appel affiché ; et
- passer (323, 721) un appel avec le numéro de téléphone d'appel avec le code ajouté,
- pour lequel le code ajouté peut être effacé après l'étape d'ajout du code, et
- le numéro de téléphone d'appel affiché est sélectionné parmi une liste d'appels receveurs.

2. Procédé selon la revendication 1, comprenant en outre, avant l'étape d'entrée (319, 717) d'un code, une étape de sélection (307, 707) d'un mode d'ajout de code lorsqu'un numéro de téléphone d'appel stocké est sélectionné.

3. Procédé selon la revendication 1, pour lequel le code représente un code de service pour un service d'info-mobile, un code de pays pour un service téléphonique international, un code de région pour un service téléphonique distant, un code de service d'itinérance ou un code de coupon mobile.

4. Terminal de communication mobile comprenant :
- une mémoire (106) pour stocker un répertoire, une liste d'appels transmetteurs ou une liste d'appels receveurs comprenant au moins un numéro de téléphone d'appel ; et
- un dispositif de commande (100) pour afficher un numéro de téléphone d'appel stocké dans la mémoire et ajouter un code entré avant le numéro de téléphone d'appel affiché suivant l'entrée d'un utilisateur et passer un appel avec le numéro de téléphone d'appel avec le code ajouté,
- pour lequel le dispositif de commande (100) est adapté à effacer le code ajouté après avoir été ajouté au numéro de téléphone d'appel, et
- le numéro de téléphone d'appel affiché est sélectionné parmi une liste d'appels receveurs de la mémoire.

5. Terminal de communication mobile selon la revendication 4, dans lequel le code représente un code de service pour un service d'info-mobile, un code de pays pour un service téléphonique international, un code de région pour un service téléphonique distant, un code de service d'itinérance ou un code de coupon mobile.

6. Support d'enregistrement lisible par ordinateur, sur lequel est enregistré un programme pour ajouter un code avant un numéro d'appel dans un terminal de communication mobile suivant le procédé selon l'une des revendications 1 à 3.
